# EUROPEAN PATENT APPLICATION

(11) **EP 3 002 735 A1**
(43) Date of publication of application: **06.04.2016**
(21) Application number: 14460059.0
(22) Date of filing: 04.10.2014
(51) Int. Cl.: G07B 15/06

(54) **Method and communication system of a public module interface of a data exchange system using NFC technology**

(71) Applicant: Nawrocki, Piotr, 88-100 Inowroclaw (PL)
(72) Inventor: Nawrocki, Piotr, 88-100 Inowroclaw (PL)
(74) Representative: Sielewiesiuk, Jakub

(57) **Abstract**

The system communication module, public interface for data exchange using NFC technology, containing NFC technology, Bluetooth, GPS, Wi-Fi, S-Beam, characterized in that it has a database **1** with data register/data concentrator/performing bi-directional data verification, radio controller **2** to read data from the tag, visual identification system **3** identifying a vehicle without a tag **7,** a billing system **4** and markers - tags **5** located on the vehicle and fitted with a microprocessor, external data bases **8** and a device as a smartphone **6.**

## Description

The object of embodiments of the invention is a method and system communication of a public module interface of data exchange system using NFC technology, designed to identify a labeled object, monitoring and verification of the distance traveled when it is in motion, especially applicable in the toll collection systems, parking systems, accounting for entry into city centers, and "park & ride" management.

NFC (Near Field Communication) technology used in the system is the development of RF/ID techniques, using electromagnetic waves to transfer data between the reader and the so-called tag (transponder), that is the RF/ID object. Electromagnetic waves are used to power the tag, in effect, it does not need to be equipped with its own power supply. Both the NFC and RF/ID enable remote communication of devices using electromagnetic waves of a certain length.

The RF/ID system works as follows: a reader with a transmitter antenna generates an electromagnetic wave. This wave is received by the tag antenna system. The tag responds to a call and using the antenna system returns a response to the reader. The establishment of communication itself is very fast - much faster than with technologies such as Wi-Fi or Bluetooth.

The maximum distance between a marker/tag, and a reader depends on the length of the electromagnetic wave used and the ambient conditions (signal attenuation), and ranges from several tens of centimeters or several meters from the reader antenna.

In the case of RF/ID communication with tag is possible, which allows to read and, in some versions, to record information. The reading system allows simultaneous identification of multiple tags within the reading field. Tags may be equipped with power supply (so-called active), in which case it is possible to read them from a distance. They may also be devoid of internal power, in which case power is obtained by means of electromagnetic waves generated by the reader (these are known as passive tags). This technology has a number of characteristics: the ability to identify objects from a distance; thanks to encrypting technology it can be used for access control, or to verify eligibility; high resistance of the system to mechanical damage and to disturbances. It can be used for example in the following industries: logistics; libraries; public transport; production.

Examples of application and implementation of the system include: employees' ID badges providing access to facilities, public transport season tickets, identification of goods/objects entering or leaving a warehouse, IDs in loyalty systems, station entrance ramps control, vehicle identification, monitoring, toll or parking fee calculation, and other applications where the key is to control the entry and exit of vehicles, e.g. roads, parking lots, halls, warehouses and construction sites.

A variety of ways and systems of electronic toll collection is known, ranging from classic vignettes and ending with the systems based on electronic devices based on radio technologies. In the latter case, a vehicle must be equipped with a device. This is a special board unit which will transmit the encoded information about the vehicle to relay installed on the toll. It enables a very fast calculation of all payments that are associated with passing through, however, there is an additional, high cost of fitting.

This technology, however, at the present time is an obsolete technology. The device requires being powered additionally with batteries. It is important to remember to charge them before setting off. In addition, there may be, for example, a disruption of communication between the device and the relay located on an entry or exit gate. A gate will not open if there are no sufficient funds on the user's account. Once a gate does not open and thus prevents a vehicle from exiting a highway, the driver must go to a toll booth and manually pay the toll to a cashier. Such situations cause disruptions in a smooth customer service. These defects cause difficulties to operate the toll collection system. Similarly, in the case of a system based on vignettes, where, in turn, there is virtually no possibility of fast electronic control and verification in the system.

European Patent No. DE4344433 discloses a method for registration of a vehicle on a paid section of a road by recording the coordinates of the location associated with the vehicle GPS (Global Positioning System) and comparing them with the coordinates of the entry/exit of a motorway section, stored in an electronic vignette. When the coordinates agree, they are transmitted by way of the digital mobile network to an accounting center outside the vehicle. In which accounting center the transmitted data are used to compute the number of highway kilometers traveled and the highway fees thus due.

The Polish Patent No. PL176105 discloses a method and apparatus for vehicle location and calculation of fees for the use of a communication route, and possibly for the use of a parking area. The method is characterized in that the actual position of a vehicle with the tracking device arranged in the vehicle is determined, the actual vehicle position is compared with a number of predetermined positions assigned to a number of virtual charging stations using the vehicle CPU. Thus obtained position data may be radio transferred to an accounting center outside the vehicle to calculate the toll; the calculation of this toll can also be made on the device in the vehicle, and the calculated fee transferred to the center, where it is deducted from the owned account. A significant drawback of this method is that the position of a vehicle must be recorded all the time and there is no possibility of an unnamed deduction from the owned account.

From the patent application WO 99/33027 PCT a method for toll collection is known, wherein to calculate the toll the current position of a vehicle is compared with the position of a conventional toll collection point, while the vehicle passing through the actual toll collection point creates a connection between the vehicle and the accounting center to settle the toll. After the actual transaction between the accounting center and the vehicle a connection is created by means of which confirmation of payment is transmitted.

The inconvenience of these known methods of calculating and charging fees is the fact that only a small accuracy can be ascertained whether an entry into the paid section of the road was made, as only passing through a toll collection point is recorded.

Polish Patent No. PL 217889 discloses a method for registration of a vehicle and toll billing at toll road sections with a known positioning system with a processor, recording the current position of a vehicle, the method comprising comparing by the control unit, the position of the vehicle with the position of at least one characteristic point of reference associated with the entry into the toll section of a road. Characterized in that the first area in the region of entry into a toll section of a road when the vehicle distance is less than a predetermined distance with respect to its characteristic and designated reference point for the entry, the distance to said entry is measured with the positioning unit, and after the entry of the vehicle into the second area designated by a line away from the same point of reference for a given distance, positioning unit also determines the actual direction of travel, by comparing the direction contained in the tolerance and direction of travel given in the area of entry and in the case of compliance of the direction contained in the field of tolerance. This unit also runs the procedure for calculating tolls. Where the vehicle is consequently in the first and second region and when the actual direction of travel is compatible with the direction of travel given for such entry, taking into account predetermined tolerances, and when is in the area of responsibility at least one control point located on the toll section of the road is activated with the positioning unit placed on the vehicle, beyond which, also using said unit, the toll calculation procedure is started. In order to determine the position and direction of the vehicle relative to at least one entry and the actual direction of travel of the vehicle in the second region covering the entry, location data is compared with the geodesic reference data contained in the vehicle electronic map using the position determining unit.

The system and method according to the invention eliminates the disadvantages of the known systems based on obsolete technologies, remote controls and proximity cards. It also allows fully unattended and wireless control and access authorization of entry and exit of vehicles, monitoring the entire field covered by the system, increasing in effect traffic throughput for the control of entries.

In the system of the invention long-range antenna is a network of identification, which automatically captures vehicles approaching a gate or a barrier. If they have the authorization, the barrier or gate opens automatically. At the same time the antennas record the event in the system, automatically collecting, gathering and processing information regarding, for example, personnel and number of vehicles present in the protected area. The system has an implemented algorithm, which is used to intelligently read license plates. Its use is intended to eliminate the risk, which is the effect, for example, of lending of passes to enter a secure area, or unlawful entry, or attempt to circumvent inspection resulting from the obligation to pay tolls or parking.

The essence of the solution according to the invention is the combination of the Internet, NFC technology, monitoring, and vehicle identification systems. The system includes a method of operation and communication of system components and system of cooperating devices, the system infrastructure, which ensures operation and communication of a user with the system through the device such as a smartphone with a microprocessor located in a tag, which has the form of a sticker affixed to the controlled object. The system communication module of the public interface for data exchange using NFC technology, containing NFC technology, Bluetooth, GPS, Wi-Fi, S-Beam, consists of a database **1** containing a data register - a hub, making the bi-directional data verification and radio controller **2**, designed to read data from the tag **5**, a video identification system **3**, identifying a vehicle without a tag **7**, a billing system **4**, and markers - tags **5**, equipped with a microprocessor and provided on a vehicle, external data bases **8** and a device in a form of a smartphone **6** with an application for control, data reading, and payment system software.

In the system, the following telecommunications / communications solutions were used: NFC (Near Field Communication) - for encrypted product identification, Bluetooth - for encrypted exchange of information, GPS (Global Positioning System) - now available in smartphones, for automatic search for the location of the controlled product, Wi-Fi - as a method of data exchange between the and a smartphone, S Beam - for encrypted identifying of the product, USB - for encrypted exchange of information, GPS - available in any model of a smartphone, for possible deletion of data in case of loss or theft of the phone or obtaining additional information based on current location. Username and password to access and use a fingerprints scanning module or application. Identification of biometric characteristics: holder's photo, fingerprint, scan of the eyeball, etc.

For secure data transmission and authentication of applications and information, the system uses secure coding encryption algorithms. The mobile application is an interface system for data exchange. The system is associated with generation and storing a unique programmed scrambling code, which serves as a read data authenticity identifier during an inspection. Each marker/tag positioned in a vehicle has its own unique identification code, allowing for confirmation of its legality, and allowing for the registration and the subsequent verification of the system. The system uses mechanisms with a high degree of control encryption during the whole process of data exchange between the application and the system, and during the transmission and storage of classified information. The method and the mode of mechanisms connection provide the uniqueness of the system and application operating functions.

In addition, a built-in GPS system, which determines the location of the inspection, it allows to mark them and enters the location in the system for the purpose of data processing. The combination of them with the data obtained from monitoring, vehicle identification and license plate recognition, is used to make a proper settlement of services to facilitate verification, as well as for statistical purposes, which will include to increase the services of the system operator.

Monitoring and identification of the vehicle and license plate identification is also part of a complete system location, providing the data necessary to determine the rates, length of the journey, or other value associated with the obligation of service settlement.

Principle of operation of the system components. System using a mechanism for the exchange of information via radio controller identifies the vehicle and checks the balance online or offline depending on the connection to the database at the time of vehicle control. The register provides full information, exchanging data bi-directionally between the user and the system using the access to the Internet, through any device that supports radio connection. The system does not require a network connection, as it also works off-line.

Successively the controller identifies the vehicle assigned to the marker/tag, while made visual identification by identifying the license plate and vehicle type. In case of detecting a vehicle without a marker/tag assigned to the vehicle, it transmits data for initiation of the vehicle identification and qualification procedure, as threatened with enforcement procedures aside the standard account charge procedure.

System database synchronization with external databases, such as CEPIK, police databases, insurance bases, allows for the verification of a vehicle and charging a user for the unauthorized transit.
NFC/RFID tag functions:
- Vehicle identification
- Storing the related registration number and vehicle type
- Storage of cached billing data
- Balance updated online by the system
- Information about offline charges to the account
- Possibility to check the account status via a mobile phone
- Possibility for mobile inspection points to do a remote reading
- Possibility to top-up with a mobile application in an NFC phone
- Recording the time of tag registration in the system
- Verification of vehicles traveling at speeds up to 200 km/h
Radio controller features:
- Vehicle identification
- Reception and transfer of a registration number for analysis
- Receiving an account balance off-line
- Charges update offline
- Updating an account balance after top-up
- Verification of vehicles traveling at speeds up to 200 km/h
Functions of license plates recognition system:
- Registration of all passing vehicles
- Archiving of the image shots of vehicles
- Working 24 hours a day at speeds up to 200 km/h
- Detection of foreign and illegible plates
- Verification of compliance of inspection stickers with vehicle license plates
- Correlation of data obtained by NFC/RFID to improve the reliability of recognition
- Classification of vehicle size
Features of a data concentrator:
- Independent system operating at tariff points
- Online and offline work
- Correlation of data from the NFC/RFID system and recognition of registration data
- Updaing content of NFC/RFID tags and data system in the central system on billing accounts
- Detection and alteration of external systems for vehicles without tags or with incorrect tags
- Correlation of the size of a vehicle with the type of a tag
- Communication with mobile checkpoints
- Geolocation
Features of a billing system:
- Checking the charges and correlation of data
- Charging and settlements
- Provision of tariff information about the detected vehicles to external systems (e.g. via TOLL)
- Reporting to external systems (operators, control institutions, external databases: CEPIK, police databases, insurance database)
- Portal for users (top-ups, status monitoring, automatic charging, invoices, mobile application, tag linking)
- Communication with POS top-up and pre-paid systems
- Ongoing visualization of traffic (heatmap), camera view
- Automatic generation of evidence (records, photos) for charging non-billed vehicles

The use of geolocation allows the system to share additional information, such as: weather information, traffic information, gas stations information, services information, road works information. Exchange of information occurs using external information systems, such as news sites or social networking sites.

Topping up and starting an account is done by: tag purchase one of the partners in the distribution network, tag registration in the system using a mobile application or any other device that supports web browsers, placing a tag marker on a vehicle and top-up in the selected billing system by one of the following:
- Charging a credit card using a system application
- Top up at a partner point network
- An external smartphone application that supports mobile payments
- Electronic transfer to the registered account
- Conventional transfer to the registered account
- Standing order
- Appending charge to the phone bill

Detection of tags is done in selected checkpoints. Check points may have a fixed or mobile form. Exchange of data between the checkpoint that identifies a vehicle and the data hub has a two-way form.

Detection of markers/tags also takes place outside the specified control system, in which there is a start and end point measurement. In this case, the data obtained from the detection of a vehicle may be used for other purposes such as monitoring, positioning, or one-time identification.

In the case of an extensive network of checkpoints, such solution can be used, for example by an owner to locate and confirm the presence of a vehicle in a designated area. Such a function can be operated via a mobile application systemically assigned to the marker/tag, or by any computer system.

Identification of an NFC/RFID marker/tag and its identification and authentication takes place at checkpoints. The encrypted data is transmitted through proximity communication, and then verified with an active participation of other system components, such as: monitoring system, vehicle detection or license plates identification, or other characteristics enabling verification in the case of application of the system in other areas than the calculation of tolls given as an example.

The system according to the invention is shown in more detail in an embodiment, on the example of settlement of tolls, parking, and entrance to a pay zone.

In the first stage, the funds are placed in the account assigned to a tag registered to a vehicle. At the time of identification of a tag at a checkpoint, the system blocks the means for the entire journey, or full, daily period of parking or entry to a pay zone. Such solution protects the system operator from attempts to evade identification or misrepresentation by changing the previously registered tags for other during the calculation of a fee, and thus trying to avoid an obligation to pay a fee.

The funds are blocked in the full amount in an account until exit from a toll road or leaving a paid parking zone. At the end of the period for calculating a fee, the difference between the calculated amount due, and the surplus blocked in an account is unblocked.
At the time a vehicle with insufficient funds is registered in the system as entering a toll road, the user is notified by a text message, or a message on his smartphone with the obligation to immediately top up his account.

In the case of identification of a vehicle with an account without an adequate amount of funds, several verifications follow to establish whether during transit such account has been topped up, blocking funds, and in such account was not topped up, marking the vehicle for a call for payment within 7 days, or in the case of further delay debt collection plus a contractual penalty.

Construction of the system and the application allows configuration changes in accordance with the legal requirements of relevant certifying authorities, and the characteristics of the particular industry in which the system is to be implemented. This does not affect the method and manner of operation of the system. Databases will be held by a commercial special-purpose entity with regard to access to certain functions of governmental bodies (e.g. CEPIK System, GDKiA or police databases) or a contractor hired by a governmental body.

Mobile application interface will be maintained and regularly updated by the target operator, and the system includes the option to integrate with all available marking the vehicle for a call for payment within 7 days, or in the case of further delay debt collection plus a contractual penalty.

Construction of the system and the application allows configuration changes in accordance with the legal requirements of relevant certifying authorities, and the characteristics of the particular industry in which the system is to be implemented. This does not affect the method and manner of operation of the system. Databases will be held by a commercial special-purpose entity with regard to access to certain functions of governmental bodies (e.g. CEPIK System, GDKiA or police databases) or a contractor hired by a governmental body.

Mobile application interface will be maintained and regularly updated by the target operator, and the system includes the option to integrate with all available operating systems and billing systems. The system will have several methods of valuation using the system, including free downloadable versions for end users.

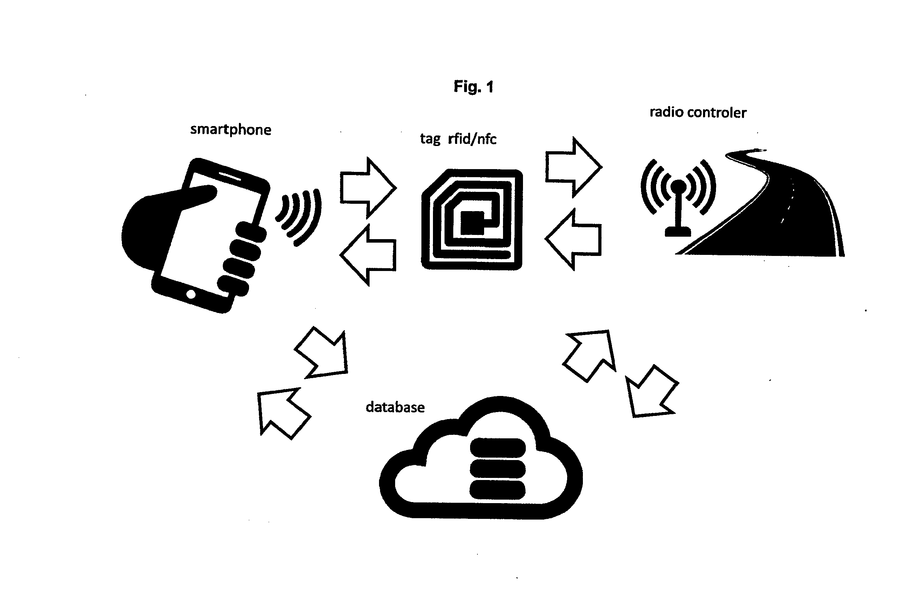

Method and system shown in more detail in Fig. 1 which shows a system that communicates a user bi-directionally to the database **1** via a smartphone **6** or any device connected to a network **2** operating a proximity technology, and by means of a microprocessor **5** provided in a label (e.g. placed on a vehicle's windscreen).

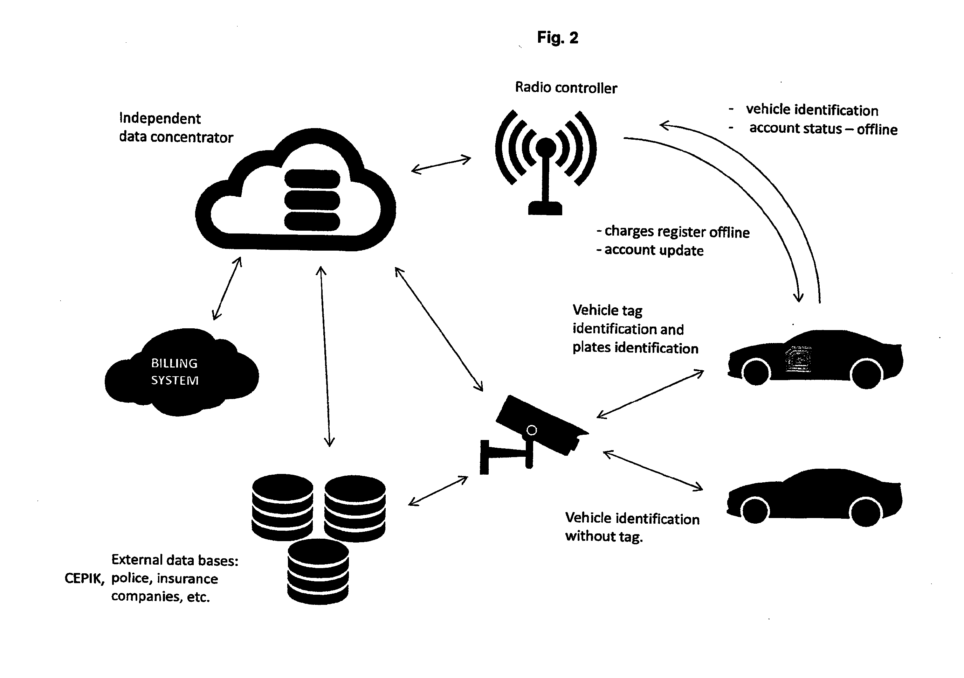

Figure 2 shows the structure of a complex system of independent local data concentrator **1** connected to the billing system **4** and external databases **8**, then the hub is connected to the radio controller **2** identifying the vehicle and account status - offline, by the microprocessor located in the tag placed in the vehicle **5,** and without ID **7**, after identification information on charges register and updates of a vehicle account is passed back.

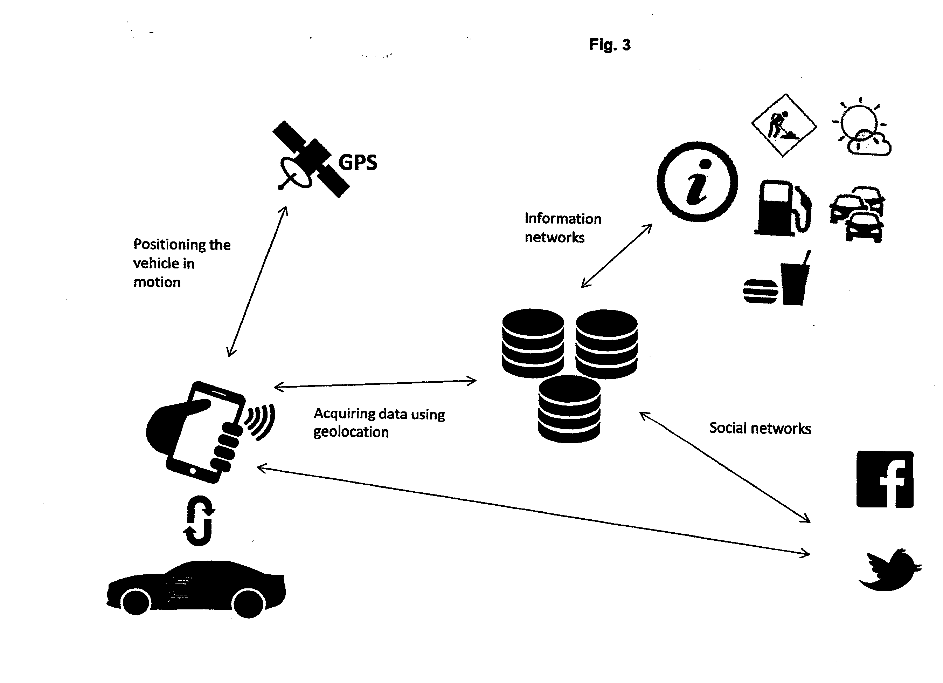

Figure 3 shows the capabilities of the system for the exchange of additional data using geolocation using a smartphone **6**, a tag with a microprocessor **5** and a GPS receiver, positioning the vehicle in motion, in sequence acquiring data **8** using geolocation and then exchanging data with social **9** and information networks **10**.

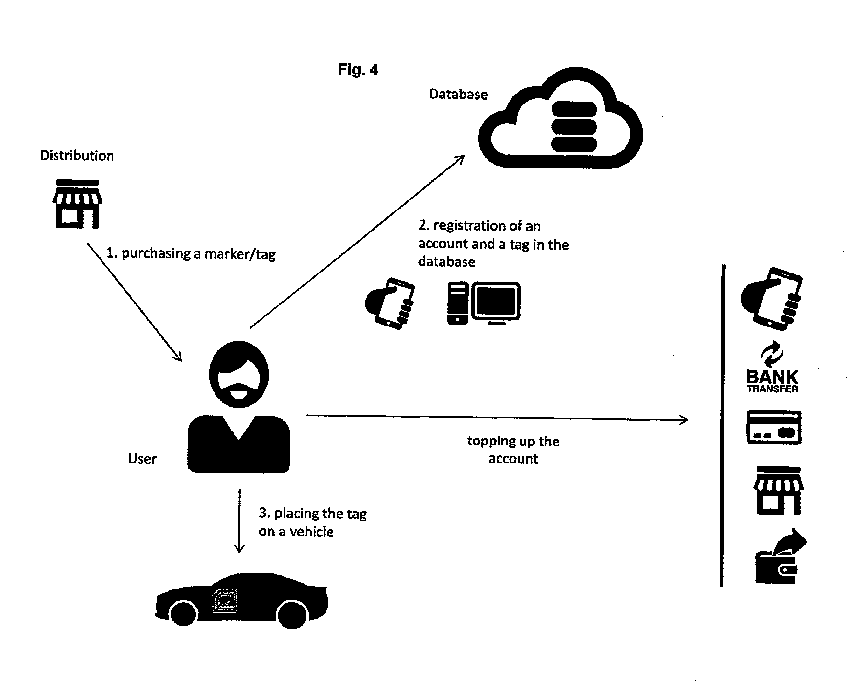

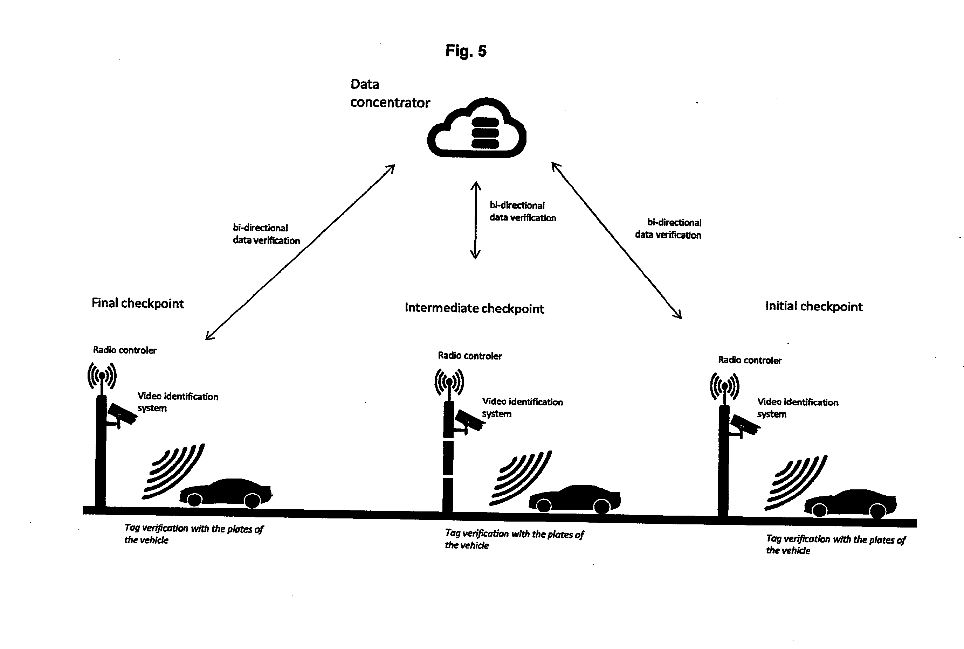

Figure 4 shows the detection of a marker/tag on a vehicle (presumed speed - up to 200 km/h), data concentrator **1** performs bi-directional data verification by exchanging information with radio controllers **2** and via a video identification system **3** in successive checkpoints deployed along the route of the controlled vehicle in the initial checkpoint **11**, any intermediate checkpoint **12** and the final checkpoint **13**.

## Claims

1. The system communication module, public interface for data exchange using NFC technology, containing NFC technology, Bluetooth, GPS, Wi-Fi, S-Beam, **characterized in that** it has a database **1** with data register/data concentrator/performing bi-directional data verification, radio controller **2** to read data from the tag, visual identification system **3** identifying a vehicle without a tag **7**, a billing system **4** and markers - tags **5** located on the vehicle and fitted with a microprocessor, external data bases **8** and a device as a smartphone **6**.

2. Communication system according to claim **1**, **characterized in that** the data hub is connected to the billing system **4** and the radio controller **2** identifying the vehicle and account status - off-line, by the microprocessor located in the tag **5** placed in the vehicle, and after the identification the information about toll registry and update the account status of the vehicle is transmitted back.

3. A method according to claim 1 **characterized in that** the identification of an NFC/RFID marker/tag and its authentication identification takes place at checkpoints **11, 12, 13,** wherein the encrypted data is transmitted through proximity communication, and then verified by the monitoring system, the vehicle detection and license plates identification, or other characteristics allowing verification.

4. The system communication module, public interface for data exchange using NFC technology, containing NFC technology, Bluetooth, GPS, Wi-Fi, S-Beam, **characterized in that** it communicates bi-directionally the user to the database via a smartphone or any device that supports proximity technology and a marker with a microprocessor - the tag on the vehicle, in sequence the register exchanging data bi-directionally between the user and the system using a web, via any device supporting radio connections via a radio controller identifies the object in the database, then the controller identifies the vehicle assigned to a marker/tag, and/or makes visual identification by identifying the license plate and a vehicle type.
